# EUROPÄISCHE PATENTANMELDUNG

(11) **EP 4 686 629 A1**
(43) Veröffentlichungstag der Anmeldung: **04.02.2026**
(21) Anmeldenummer: 25193048.3
(22) Anmeldetag: 31.07.2025
(51) Int. Cl.: B60T 17/00, F16D 66/00, B60T 13/00

(54) **VERFAHREN ZUM BESTIMMEN EINER BREMSKENNGRÖSSE FÜR EINEN BREMSVORGANG EINES SCHIENENGÜTERWAGENS, SCHIENENGÜTERWAGEN UND ANORDNUNG MIT SCHIENENGÜTERWAGEN**

(30) Priorität: 02.08.2024 DE 102024122123
(71) Anmelder: Technische Universität Berlin, 10623 Berlin (DE)
(72) Erfinder: PECHE, Florian, Falkensee (DE)
(74) Vertreter: Schlegel, Sebastian

(57) **Zusammenfassung**

Die Erfindung betrifft ein Verfahren zum Bestimmen einer Bremskenngröße für einen Bremsvorgang eines Schienengüterwagens mit: Bereitstellen einer Drehmesseinrichtung (10), die eingerichtet ist, Messwerte für eine oder mehrere Kenngrößen einer Drehbewegung zu erfassen; Erfassen eines Messwertes für eine Kenngröße einer Drehbewegung eines drehbar gelagerten Bauteils (6) eines Bremsgestängestellers (5) eines Bremssystems eines Schienengüterwagens, welche das drehbar gelagerte Bauteil beim Lösen des Bremssystems nach einem vorangehenden Bremsvorgang ausführt; Bereitstellen des Messwertes für die Kenngröße in einer Auswerteeinrichtung und Bestimmen einer Bremskenngröße, welche den vorangehenden Bremsvorgang charakterisiert, mittels der Auswerteeinrichtung auf Basis des Messwertes für die Kenngröße. Weiterhin sind ein Schienengüterwagen und eine Anordnung geschaffen, die eingerichtet ist, das Verfahren auszuführen.

## Beschreibung

Die Erfindung betrifft ein Verfahren zum Bestimmen einer Bremskenngröße für einen Bremsvorgang eines Schienengüterwagens, einen Schienengüterwagen sowie eine Anordnung mit einem Schienengüterwagen.

### Hintergrund

Der europäische Schienengüterverkehr ist bestrebt, Prozesse zu digitalisieren. Ein großes Hindernis hierbei sind die Schienengüterwagen, welche im Allgemeinen nicht elektrifiziert sind. Aufgrund der geplanten Einführung der Digitalen Automatischen Kupplung soll dieses Problem jedoch gelöst werden. Es gibt bereits Anwendungen, die mittels Einsatz von Batterien oder Radsatzgeneratoren den Betrieb von Sensorik auf Schienengüterwagen grundsätzlich ermöglichen. Hierzu zählt auch die im Jahr 2023 in der Schweiz zugelassene Automatische Bremsprobe, welche den manuellen Vorgang der Bremsprobe, unter Verwendung von Sensorik, automatisiert. Es wurde vorgeschlagen, bei Druckluftbremssystemen zum Bestimmen eines Zustands der Bremsanlage von Schienengüterwagen einen Druck im Bremszylinder und / oder eine Kraft im Bremsgestänge zu erfassen. Die Ermittlung der Kraft im Bremsgestänge erfolgt zum Beispiel entweder mittels applizierter Dehnmesstreifen oder mit Hilfe eines in das Gestänge integrierten Kraftsensors.

### Zusammenfassung

Aufgabe der Erfindung ist es, ein Verfahren zum Bestimmen einer Bremskenngröße für einen Bremsvorgang eines Schienengüterwagens, einen Schienengüterwagen sowie eine Anordnung mit einem Schienengüterwagen anzugeben, mit denen auf effiziente und sichere Art und Weise die Charakterisierung eines Bremsvorgangs des Schienengüterwagens ermöglicht ist.

Zur Lösung ist ein Verfahren zum Bestimmen einer Bremskenngröße für einen Bremsvorgang eines Schienengüterwagens nach dem unabhängigen Anspruch 1 geschaffen. Die nebengeordneten Ansprüche 14 und 15 betreffen einen Schienengüterwagen sowie eine Anordnung mit einem Schienengüterwagen zum Ausführen des Verfahrens. Weitere Ausgestaltungen sind Gegenstand von abhängigen Unteransprüchen.

Nach einem Aspekt ist ein Verfahren zum Bestimmen einer Bremskenngröße für einen Bremsvorgang eines Schienengüterwagens geschaffen, bei dem Folgendes vorgesehen ist: Bereitstellen einer Drehmesseinrichtung, die eingerichtet ist, Messwerte für eine oder mehrere Kenngrößen einer Drehbewegung zu erfassen; Erfassen eines Messwertes für eine Kenngröße einer Drehbewegung eines drehbar gelagerten Bauteils eines Bremsgestängestellers eines Bremssystems eines Schienengüterwagens, welche das drehbar gelagerte Bauteil beim Lösen des Bremssystems nach einem vorangehenden Bremsvorgang ausführt; Bereitstellen des Messwertes für die Kenngröße in einer Auswerteeinrichtung und Bestimmen einer Bremskenngröße, welche den vorangehenden Bremsvorgang charakterisiert, mittels der Auswerteeinrichtung auf Basis des Messwertes für die Kenngröße.

Nach einem weiteren Aspekt ist ein Schienengüterwagen mit einem Bremssystem und einer Drehmesseinrichtung geschaffen. Das Bremssystem des Schienengüterwagens weist einen Bremsgestängesteller auf. Die Drehmesseinrichtung ist eingerichtet, einen Messwert für eine oder mehrere Kenngrößen einer Drehbewegung eines drehbaren Bauteils des Bremsgestängestellers zu erfassen, welche das drehbar gelagerte Bauteil beim Lösen des Bremssystems nach einem vorangehenden Bremsvorgang ausführt.

Nach einem weiteren Aspekt ist eine Anordnung mit einem Schienengüterwagen und einer Auswerteeinrichtung zum Ausführen des vorangehend angegebenen Verfahrens zum Bestimmen einer Bremskenngröße für einen Bremsvorgang des Schienengüterwagens geschaffen.

Es wurde überraschend gefunden, dass eine Drehbewegung, die ein oder mehrere Bauteile des Bremsgestängestellers des Bremssystems des Schienengüterwagens beim Lösen des Bremssystems nach einem vorangehenden Bremsvorgang ausführen, messtechnisch ausgewertet werden kann, um Informationen betreffend eine oder mehrerer Bremskenngrößen für den vorangehenden Bremsvorgang zu bestimmen. Die Analyse oder Charakterisierung solcher Bremsvorgänge ist zum Beispiel von Bedeutung, um die ordnungsgemäße Funktion des Bremssystems des Schienengüterwagens zu überprüfen. Auch für eine Wartung des Schienengüterwagens können Informationen über ein oder mehrere Bremskenngrößen herangezogen werden, um ggf. notwendige Wartungsmaßnahmen zu ergreifen.

Weiterhin kann vorgesehen sein, die Informationen über die eine oder die mehreren Bremskenngrößen für die Zugsteuerung eines Güterwagenzuges zu verwenden.

Der Bremsgestängesteller ist ein Bauteil des Bremssystems oder der Bremsanlage, welches für das Bremsgestänge verlängernd oder verkürzend wirkt, um einen Hub des Bremszylinders im Wesentlichen konstant zu halten. Die Funktion des Bremsgestängestellers kann normiert sein, beispielsweise auf Basis von DIN EN 16241.

Das Bremssystem des Schienengüterwagens kann ein Druckluftbremssystem sein.

Bei dem Verfahren kann weiterhin Folgendes vorgesehen sein: Erfassen eines weiteren Messwertes für eine weitere Kenngröße der Drehbewegung des drehbar gelagerten Bauteils des Bremsgestängestellers beim Lösen des Bremssystems nach dem vorangehenden Bremsvorgang ausführt, wobei die weitere Kenngröße von der Kenngröße verschieden ist; und Bereitstellen des weiteren Messwertes für die weitere Kenngröße in der Auswerteeinrichtung. Bei diesem Ausführungsbeispiel werden für mehrere Kenngrößen der Drehbewegung jeweils ein oder mehrere Messwerte erfasst, die die Drehbewegung des drehbar gelagerten Bauteils des Bremsgestängestellers beim Lösen des Bremssystems charakterisieren. Ausgehend hiervon können mehrere Bremskenngrößen für den vorangehenden Bremsvorgang bestimmt werden.

Bei dieser oder anderen Ausführungsbeispielen kann vorgesehen sein, mittels der Auswerteeinrichtung eine weitere Bremskenngröße zu bestimmen, welche von der Bremskenngröße verschieden ist und den vorangehenden Bremsvorgang charakterisiert. Das Bestimmen der Kenngröße und wahlweise der weiteren Bremskenngröße kann auf Basis des Messwertes für die Kenngröße und wahlweise unter Einbeziehung des weiteren Messwertes für die weitere Kenngröße erfolgen.

Die Kenngröße und die weitere Kenngröße können eine Kenngröße aus der folgenden Gruppe sein: Drehwinkel der Drehbewegung und Winkelgeschwindigkeit der Drehbewegung. Die Drehmesseinrichtung ist hierbei eingerichtet, den Drehwinkel und / oder die Winkelgeschwindigkeit für die Drehbewegung des drehbar gelagerten Bauteils des Bremsgestängestellers zu messen oder zu erfassen. In einer vereinfachten Ausführung kann vorgesehen sein, nur den Drehwinkel oder nur die Winkelgeschwindigkeit messtechnisch zu erfassen.

Auf Basis des Messwertes für die Kenngröße kann als Bremskenngröße eine bei dem vorangehenden Bremsvorgang aufgewandte Bremskraft bestimmt werden.

Die bei dem vorangehenden Bremsvorgang aufgewandte Bremskraft kann auf Basis des Drehwinkels der Drehbewegung des drehbar gelagerten Bauteils beim Lösen des Bremssystems bestimmt werden.

Als Bremskenngröße oder weitere Bremskenngröße kann auf Basis des Messwertes für die Kenngröße und / oder des weiteren Messwertes für die weitere Kenngröße eine bei dem vorangehenden Bremsvorgang angewendete Bremsstellung des Bremssystems des Schienengüterwagens bestimmt werden. Für das Bremssystem können unterschiedliche Bremsstellungen oder -zustände eingestellt werden, beispielsweise mit Hilfe eines Stellhebels oder -arms, der zum Beispiel zum Einstellen der Bremsstellung schwenkbar sein kann. Die unterschiedlichen Bremsstellungen sind dadurch charakterisiert, dass für das Bremssystem im Fall eines Druckluftbremssystems die Bremskraftaufbau- und Bremskraftlösezeit beim Bremsvorgang kürzer oder länger ist.

Ausgehend von dem Messwert für die Kenngröße und / oder dem weiteren Messwert für die weitere Kenngröße wird mit Hilfe der Auswerteeinrichtung die beim vorangehenden Bremsvorgang eingestellte Bremsstellung bestimmt. Es kann vorgesehen sein, die bei dem vorangehenden Bremsvorgang angewendete Bremsstellung des Bremssystems auf Basis des Messwerts und / oder des weiteren Messwerts für die Winkelgeschwindigkeit der Drehbewegung des drehbaren Bauteils des Bremsgestängestellers zu bestimmen.

Der Messwert kann für eine Kenngröße der Drehbewegung eines Mantelrohrs des Bremsgestängestellers des Bremssystems des Schienengüterwagens erfasst werden, welche das Mantelrohr beim Lösen des Bremssystems nach dem vorangehenden Bremsvorgang ausführt. Das Mantelrohr des Bremsgestängestellers ist drehbar gelagert und führt beim Lösen des Bremssystems nach dem vorangehenden Bremsvorgang als Reaktion auf das Lösen des Bremssystems eine Drehbewegung aus.

Der weitere Messwert kann für eine weitere Kenngröße der Drehbewegung des Mantelrohrs des Bremsgestängestellers des Bremssystems des Schienengüterwagens erfasst werden.

Alternativ oder ergänzend kann die beim Lösen des Bremssystems nach dem vorangehenden Bremsvorgang ausgeführte Drehbewegung eines weiteren drehbaren Bauteils des Bremsgestängestellers erfasst und ausgewertet werden. Zum Beispiel können die Drehbewegung einer Vorschubmutter des Bremsgestängestellers erfasst und die hierfür gemessene(n) Kenngröße(n) zum Bestimmen einer oder mehrerer Bremskenngrößen ausgewertet werden.

Der Messwert für die Kenngröße der Drehbewegung kann mit einer Drehmesseinrichtung erfasst werden, die mittels einer Halteeinrichtung zumindest teilweise an einem Steuerbügel des Bremsgestängestellers angeordnet sind. Die Drehmesseinrichtung ist ganz oder teilweise, also insbesondere mit einer oder allen Funktionskomponenten oder -einheiten der Drehmesseinrichtung, an dem Steuerbügel des Bremsgestängestellers angeordnet und montiert, beispielsweise mit Hilfe eines Adapters. Die wahlweise den Adapter umfassende Halteeinrichtung kann an dem Steuerbügel zum Beispiel lösbar montiert sein. Mit Hilfe der Anordnung von zumindest Teilen der Drehmesseinrichtung an dem Steuerbügel sind eventuelle Störungen verhindert oder wenigstens gemindert, die aufgrund des sich im Raum relativ zum Schienengüterwagen bewegenden Bremsgestängestellers im Betrieb die Messwerterfassung nachteilig beeinflussen können.

Der Messwert für die Kenngröße der Drehbewegung kann mit einer Drehmesseinrichtung erfasst werden, bei der die Halteeinrichtung eingerichtet ist, die Drehmesseinrichtung zumindest teilweise federnd an dem Steuerbügel des Bremsgestängestellers haltend aufzunehmen oder zu halten. Eine oder mehrere Funktionskomponenten oder -einheiten der Drehmesseinrichtung, zum Beispiel eine Detektionseinheit zum Bereitstellen von Messsignalen für den Messwert, können so mit Hilfe der Halteeinrichtung federnd, insbesondere elastisch federnd aufgenommen und gehalten werden, wodurch ein eventuell auftretender nachteiliger Einfluss von Erschütterungen im Betrieb des Schienengüterwagens weiter gemindert ist.

Der Messwert für die Kenngröße der Drehbewegung kann mit einer berührungslosen Drehmesseinrichtung erfasst werden. Eine berührungslose Messwerterfassung unterstützt einen sicheren Betrieb der Drehmesseinrichtung zum Erfassen der Messwerte für die Drehbewegung des drehbaren Bauteils des Bremsgestängestellers. Unterschiedliche berührungslose Messverfahren können für die Drehmesseinrichtung vorgesehen sein, zum Beispiel optische, induktive oder magnetische Messverfahren.

Der Messwert für die Kenngröße der Drehbewegung kann mit einer Drehmesseinrichtung erfasst werden, die ein Inkrementenrad an dem drehbaren Bauteil und einen zugeordneten Hall-Sensor aufweisen. Das Inkrementenrad kann sich umlaufend um das drehbare Bauteil erstrecken. Eine Anordnung von Magnetelementen kann an dem Inkrementenrad um das drehbare Bauteil umlaufend vorgesehen sein. Der Hall-Sensor kann in der Drehmesseinrichtung zum Inkrementenrad, welches sich bei der Drehbewegung des drehbaren Bauteils dreht, relativ ruhend angeordnet sein. Der Hall-Sensor kann zum Beispiel mit Hilfe der Halteeinrichtung an dem Steuerbügel des Bremsgestängestellers dem Inkrementenrad gegenüberliegend gehalten werden.

Der Messwert für die Kenngröße kann in einer Auswerteeinrichtung bereitgestellt werden, die mit einer Bremssystemsteuerung des Bremssystems verbunden oder eine Funktionseinheit hiervon ist. Die Bremssystemsteuerung, mit der der Betrieb des Bremssystems für den Schienengüterwagen oder einen Zug mit mehreren Schienengüterwagen sowie zugehöriger Lokomotive im Betrieb gesteuert wird, kann beispielweise in der Lokomotive angeordnet sein.

Die Übertragung des Messwertes für die Kenngröße kann mit Hilfe einer drahtlosten Datenkommunikation zur Auswerteeinrichtung erfolgen.

Bei dieser oder anderen Ausführungsformen kann die Auswerteeinrichtung einen Prozessor sowie eine zugeordnete Speichereinrichtung für eine elektronische Datenverarbeitung aufweisen. Auf der Auswerteeinrichtung sind eine oder mehrere Software-Applikationen implementiert, die eingerichtet sind, aus den Messwerten eine oder mehrere Bremskenngrößen zu bestimmen.

Das Erfassen des Messwertes für die Kenngröße der Drehbewegung und das Bestimmen der Bremskenngröße können im Rahmen einer automatischen Bremsprobe für den Schienengüterwagen oder einen den Schienengüterwagen umfassenden Güterwagenzug ausgeführt werden. Die automatische Bremsprobe im Schienengüterverkehr entspricht einer benutzergeführten Bremsprobe, welche zum Beispiel im Dokument VDV 757 Teil B beschrieben ist.

Im Zusammenhang mit dem Schienengüterwagen und der Anordnung mit dem Schienengüterwagen, können die vorangehend erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung einer Anordnung für ein Bremssystem eines Schienengüterwagens mit angelegten Bremsen während eines Bremsvorgangs;
- Fig. 2: eine schematische Darstellung der Anordnung aus Fig. 1 mit gelösten Bremsen;
- Fig. 3: eine schematische perspektivische Darstellung eines Abschnitts eines Bremsgestängestellers sowie einer zugeordneten Drehmesseinrichtung und
- Fig. 4: eine schematische grafische Darstellung für zeitabhängige Spannungsmesssignale für eine Drehbewegung eines drehbaren Bauteils eines Bremsgestängestellers eines Druckluftbremssystems.

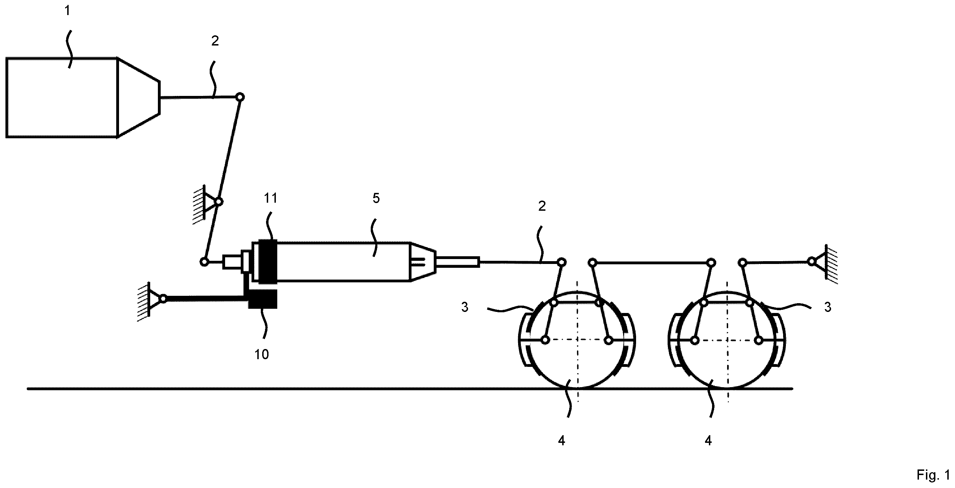

Fig. 1 zeigt eine schematische Darstellung einer Anordnung für ein Bremssystem eines Schienengüterwagens, insbesondere für ein Druckluftbremssystem. Es sind angelegte Bremsen gezeigt. Mit Hilfe eines von einem Bremszylinder 1 bereitgestellten Arbeitshubs (Kolbenhub) wird zum Betätigen des Bremssystems ein Bremsgestänge 2 in Gang gesetzt, derart, dass schließlich Bremsklötze 3 gegen eine Lauffläche der Räder 4 des Schienengüterwagens gepresst werden, um zu bremsen.

Bei der Anordnung gemäß Fig. 1 ist ein Bremsgestängesteller 5 vorgesehen, dessen Aufgabe es insbesondere ist, einen Kolbenhub des Bremszylinders 1 zum Betätigen des Bremsgestänges 2 konstant zu halten, welcher sich aufgrund eines Verschleißes im Bremsgestänge 2 und / oder an den Laufflächen der Räder 4 sowie aufgrund des Be- und Entladens des Schienengüterwagens ändern kann. Der Kolbenhub des Bremszylinders 1 ist begrenzt und verursacht bei zu großen Hüben große Verschiebungen im Bremsgestänge 2, was sich negativ auf die Kraftübertragung innerhalb des Bremsgestänges 2 auswirkt. Außerdem verursacht ein zu großer Kolbenhub einen erhöhten Luftverbrauch im Druckluftbremssystem. Dem wirkt der Bremsgestängesteller 5 entgegen.

Bei Lokomotiven bespannten Zügen von Schienengüterwagen weist jede Bremseinheit des Bremssystems des Zuges den jeweils zugeordneten Bremsgestängesteller 5 auf. Anforderungen an Konstruktionen, Fertigung und Typprüfung sind für den Bremsgestängesteller 5 zum Beispiel in DIN EN 16241 definiert.

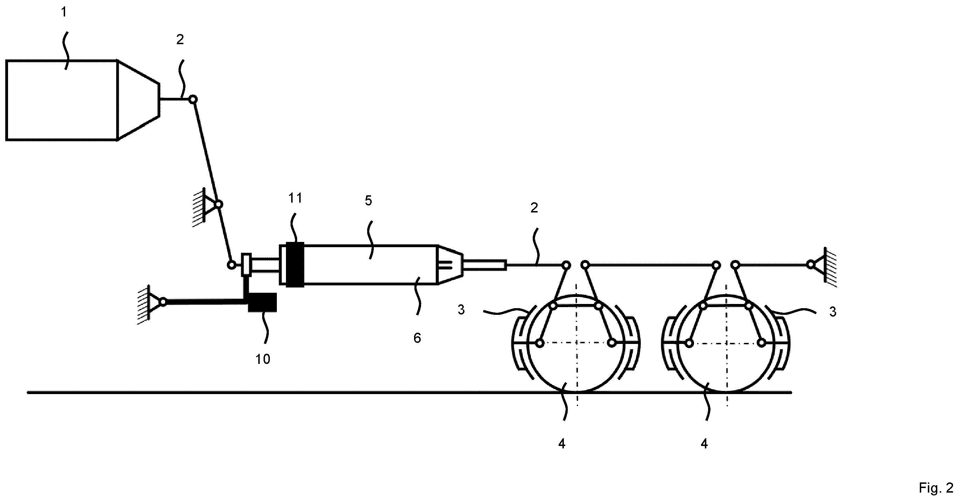

Fig. 2 zeigt für die Anordnung aus Fig. 1 gelöste Bremsen des Bremssystems. Aufgrund eines entsprechenden Rückhubs des Bremszylinders 1 werden die Bremsklötze 3 als Reaktion auf eine Verlagerung des Bremsgestänges 2 von der Lauffläche der Räder 4 gelöst. Beim Lösen des Bremssystems nach dem vorangehenden Bremsvorgang (vgl. Fig. 1) führt ein Mantelrohr 6 des Bremsgestängestellers 5 aufgrund der mechanischen Konstruktion des Bremsgestängestellers 5 eine Drehbewegung aus. Es wurde überraschend gefunden, dass die Drehbewegung des Mantelrohrs 6 gemessen und ausgewertet werden kann, um Informationen über eine oder mehrere Bremskenngrößen für den zuvor ausgeführten Bremsvorgang zu bestimmen.

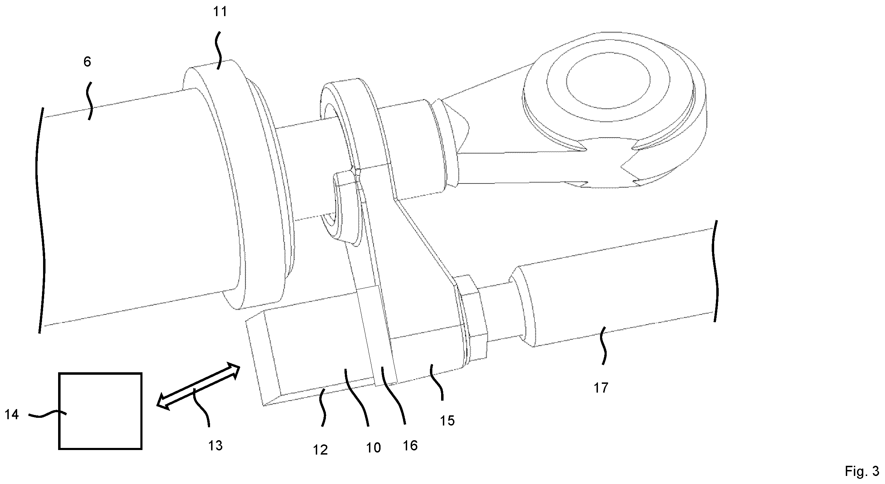

Fig. 3 zeigt eine schematische perspektivische Darstellung eines Abschnitts des Bremsgestängestellers 5 sowie einer Drehmesseinrichtung 10, die dem Bremsgestängesteller 5 zugeordnet und eingerichtet ist, Messwerte für eine oder mehrere Kenngrößen der Drehbewegung des Mantelrohrs 6 zu erfassen.

Die Drehmesseinrichtung 10 ist eingerichtet einen Drehwinkel und / oder eine Winkelgeschwindigkeit für die Drehbewegung des Mantelrohrs 6 berührungslos zu erfassen. Im gezeigten Beispiel weist die Drehmesseinrichtung 10 hierzu ein auf dem Mantelrohr 6 angeordnetes Inkrementenrad 11 sowie einen gegenüberliegend angeordneten Hall-Sensor 12 auf. Entlang des Umfangs des Inkrementenrads 11 sind magnetische Elemente angeordnet, die beim Drehen des Mantelrohrs 6 (und somit beim Drehen des Inkrementenrads 11) an dem Hall-Sensor 12 vorbeigeführt werden. Auf diese Weise können Messwerte für Kenngrößen der Drehbewegung des Mantelrohrs 6 mit Hilfe der Drehmesseinrichtung 10 erfasst werden, insbesondere ein Drehwinkel und / oder eine Winkelgeschwindigkeit.

Elektronische Messsignale, die die erfassten Messwerte anzeigen, können dann über eine drahtlose Datenverbindung 13 zu einer Auswerteieinrichtung 14 übertragen werden, um mit Hilfe der Auswerteeinrichtung 14 auf Basis der Messwerte für die eine oder die mehreren Kenngrößen der Drehbewegung ein oder mehrere Bremskenngrößen zu bestimmen, die den Bremsvorgang charakterisieren, welcher dem Lösen des Bremssystems vorangeht.

Die Abhängigkeit der Drehbewegung des Mantelrohrs 6 von dem vorangehenden Bremsvorgang wird so genutzt, um diesen anhand einer oder mehrerer Bremskenngrößen zu charakterisieren, beispielsweise die hierbei angewendete Bremskraft. Die im vorangehenden Bremsvorgang aufgewendete Bremskraft kann zum Beispiel auf Basis der Messwerte für den Drehwinkel der Drehbewegung des Mantelrohrs 6 bestimmt werden.

Als Bremskenngröße kann alternativ oder ergänzend auf Basis der Messwerte für die Kenngröße(n) eine bei dem vorangehenden Bremsvorgang (in der Ausführung des Bremssystems als Druckluftbremssystem) angewendete Bremsstellung des Bremssystems des Schienengüterwagens bestimmt werden. Für das Bremssystem können unterschiedliche Bremsstellungen eingestellt werden, beispielsweise mit Hilfe eines Stellhebels oder -arms, der zum Beispiel zum Einstellen der Bremsstellung schwenkbar sein kann. Die unterschiedlichen Bremsstellungen sind dadurch charakterisiert, dass die Bremskraftaufbau- und Bremskraftlösezeit des Bremssystems im Fall eines Druckluftbremssystems bei dem Bremsvorgang kürzer oder länger einstellbar sind.

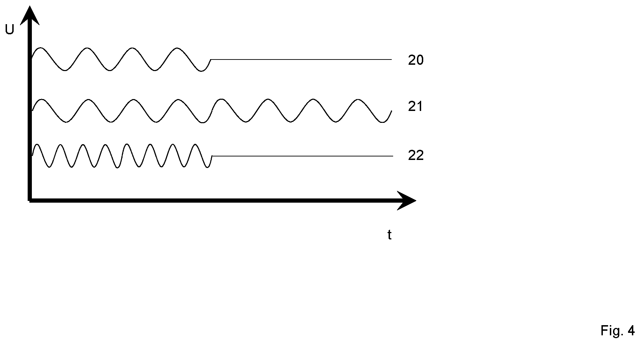

Liegt das mit Hilfe der Drehmesseinrichtung 10 erfasste elektronische Messsignal für die Drehbewegung eines drehbaren Bauteils des Bremsgestängestellers 5, insbesondere des Mantelrohres 6, als von der Zeit abhängiges Spannungssignal U(t) in Sinusform vor (vgl. Fig. 4), so kann die Anzahl der Schwingungen, welche proportional zur Anzahl von Drehungen des drehbaren Bauteils des Bremsgestängestellers 5 ist, ausgewertet werden, um die im vorangehenden Bremsvorgang angewendete Bremskraft zu bestimmen. Bei kleineren im Bremsvorgang angewendeten Bremskräften (vgl. Kurve 20 in Fig. 4) ist der Drehwinkel und somit die Anzahl der Schwingungen geringer als bei größeren Bremskräften (vgl. Kurve 21 in Fig. 4).

Liegt das mit Hilfe der Drehmesseinrichtung 10 erfasste elektronische Messsignal als von der Zeit abhängiges Spannungssignal in Sinusform vor, so gibt die Frequenz, welche eine Drehgeschwindigkeit der erfassten Drehbewegung indiziert, Aufschluss über die im vorangehenden Bremsvorgang angewendete Bremsstellung. Bei einer Bremsstellung mit kurzer Bremskraftlösezeit (vgl. Kurve 22 in Fig. 4) ist die Frequenz höher als bei einer Bremsstellung mit einer längeren Bremskraftlösezeit (vgl. Kurve 21 in Fig. 4).

Gemäß Fig. 3 ist die Drehmesseinrichtung 10 zumindest teilweise an einen Steuerbügel 15 des Bremsgestängestellers 5 angeordnet. Hierbei kann vorgesehen sein, die Teile oder Komponenten der Drehmesseinrichtung 10 federnd an dem Steuerbügel 15 aufzunehmen, wobei der entsprechende Teil der Drehmesseinrichtung 10 in axialer und / oder radialer Richtung in Bezug auf die Längsachse des Bremsgestängestellers 5 federbar sein kann. Hierzu kann eine Halteeinrichtung 16, mit der beim gezeigten Beispiel der Hall-Sensor 12 an dem Steuerbügel 15 angeordnet ist, entsprechend ausgeführt sein.

Der üblichen Bauweise eines Bremsgestängestellers entsprechend ist eine Steuerstange 17 radial versetzt zum Mantelrohr 6 des Bremsgestängestellers 5 angeordnet, was mit Hilfe des Steuerbügels 15 ermöglicht ist.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Bestimmen einer Bremskenngröße für einen Bremsvorgang eines Schienengüterwagens, mit
- Bereitstellen einer Drehmesseinrichtung (10), die eingerichtet ist, Messwerte für eine oder mehrere Kenngrößen einer Drehbewegung zu erfassen;
- Erfassen eines Messwertes für eine Kenngröße einer Drehbewegung eines drehbar gelagerten Bauteils (6) eines Bremsgestängestellers (5) eines Bremssystems eines Schienengüterwagens, welche das drehbar gelagerte Bauteil beim Lösen des Bremssystems nach einem vorangehenden Bremsvorgang ausführt;
- Bereitstellen des Messwertes für die Kenngröße in einer Auswerteeinrichtung (13) und
- Bestimmen einer Bremskenngröße, welche den vorangehenden Bremsvorgang charakterisiert, mittels der Auswerteeinrichtung (13) auf Basis des Messwertes für die Kenngröße.

2. Verfahren nach Anspruch 1, **gekennzeichnet durch**
- Erfassen eines weiteren Messwertes für eine weitere Kenngröße der Drehbewegung des drehbar gelagerten Bauteils (6) des Bremsgestängestellers (5) beim Lösen des Bremssystems nach dem vorangehenden Bremsvorgang ausführt, wobei die weitere Kenngröße von der Kenngröße verschieden ist; und
- Bereitstellen des weiteren Messwertes für die weitere Kenngröße in der Auswerteeinrichtung (13).

3. Verfahren nach Anspruch 1 oder 2, **dadurch gekennzeichnet, dass** die Kenngröße und die weitere Kenngröße eine Kenngröße aus der folgenden Gruppe sind: Drehwinkel der Drehbewegung und Winkelgeschwindigkeit der Drehbewegung.

4. Verfahren nach mindestens einem der vorangehenden Ansprüche, dadurch **gekenn**- **zeichnet**, dass auf Basis des Messwertes für die Kenngröße als Bremskenngröße eine bei dem vorangehenden Bremsvorgang aufgewandte Bremskraft bestimmt wird.

5. Verfahren nach Anspruch 4, **dadurch gekennzeichnet, dass** die bei dem vorangehenden Bremsvorgang aufgewandte Bremskraft auf Basis des Drehwinkels der Drehbewegung des drehbar gelagerten Bauteils (6) beim Lösen des Bremssystems bestimmt wird.

6. Verfahren nach mindestens einem der vorangehenden Ansprüche, **dadurch gekennzeichnet, dass** auf Basis des Messwertes für die Kenngröße und / oder des weiteren Messwertes für die weitere Kenngröße als Bremskenngröße eine bei dem vorangehenden Bremsvorgang angewendete Bremsstellung des Bremssystems des Schienengüterwagens bestimmt wird.

7. Verfahren nach mindestens einem der vorangehenden Ansprüche, **dadurch gekennzeichnet, dass** der Messwert für eine Kenngröße der Drehbewegung eines Mantelrohrs des Bremsgestängestellers (5) des Bremssystems des Schienengüterwagens erfasst wird, welche das Mantelrohr beim Lösen des Bremssystems nach dem vorangehenden Bremsvorgang ausführt.

8. Verfahren nach mindestens einem der vorangehenden Ansprüche, dadurch **gekenn**- **zeichnet**, dass der Messwert für die Kenngröße der Drehbewegung mit einer Drehmesseinrichtung (10) erfasst wird, die mittels einer Halteeinrichtung zumindest teilweise an einem Steuerbügel des Bremsgestängestellers (5) angeordnet ist.

9. Verfahren nach Anspruch 8, **dadurch gekennzeichnet, dass** der Messwert für die Kenngröße der Drehbewegung mit einer Drehmesseinrichtung (10) erfasst wird, bei der die Halteeinrichtung eingerichtet ist, die Drehmesseinrichtung (10) zumindest teilweise federnd an dem Steuerbügel des Bremsgestängestellers (5) haltend aufzunehmen.

10. Verfahren nach mindestens einem der vorangehenden Ansprüche, **dadurch gekennzeichnet, dass** der Messwert für die Kenngröße der Drehbewegung mit einer berührungslosen Drehmesseinrichtung (10) erfasst wird.

11. Verfahren nach Anspruch 10, **dadurch gekennzeichnet, dass** der Messwert für die Kenngröße der Drehbewegung mit einer Drehmesseinrichtung (10) erfasst wird, die ein Inkrementenrad an dem drehbaren Bauteil und einen zugeordneten Hall-Sensor aufweist.

12. Verfahren nach mindestens einem der vorangehenden Ansprüche, **dadurch gekennzeichnet, dass** der Messwert für die Kenngröße in einer Auswerteeinrichtung (13) bereitgestellt wird, die mit einer Bremssystemsteuerung des Bremssystems verbunden oder eine Funktionseinheit hiervon ist.

13. Verfahren nach mindestens einem der vorangehenden Ansprüche, dadurch **gekenn**- **zeichnet**, dass das Erfassen des Messwertes für die Kenngröße der Drehbewegung und das Bestimmen der Bremskenngröße im Rahmen einer automatischen Bremsprobe für den Schienengüterwagen oder einen den Schienengüterwagen umfassenden Güterwagenzug ausgeführt werden.

14. Schienengüterwagen, mit
- einem Bremssystem, welches einen Bremsgestängesteller (5) aufweist; und
- einer Drehmesseinrichtung (10), die eingerichtet ist, einen Messwert für eine oder mehrere Kenngrößen einer Drehbewegung eines drehbaren Bauteils (6) des Bremsgestängestellers (5) zu erfassen, welche das drehbar gelagerte Bauteil (6) beim Lösen des Bremssystems nach einem vorangehenden Bremsvorgang ausführt.

15. Anordnung, die eingerichtet ist, das Verfahren nach mindestens einem der Ansprüche 1 bis 13 auszuführen, und Folgendes aufweist:
- einen Schienengüterwagen nach Anspruch 14 und
- eine Auswerteeinrichtung (13), die eingerichtet ist, den Messwert für die Kenngröße der Drehbewegung zu empfangen und auf Basis des Messwertes eine Bremskenngröße zu bestimmen, welche einen Bremsvorgang charakterisiert.
